# EUROPEAN PATENT APPLICATION

(11) **EP 0 844 084 A1**
(43) Date of publication of application: **27.05.1998**
(21) Application number: 96935487.7
(22) Date of filing: 29.10.1996
(51) Int. Cl.: B41F 31/26, F16C 13/00

(54) **ROLLER TEMPERATURE CONTROL SYSTEM**

(30) Priority: 02.05.1996 JP 135893/96
(71) Applicant: Baldwin-Japan Ltd., Tokyo 135 (JP)
(72) Inventor: YAIRI, Masaki, Shizuoka Kojo, Baldwin-Japan Ltd., Shimizu-shi, Shizuoka 424-01 (JP)
(74) Representative: Englaender, Klaus, Dipl.-Ing.
(86) International application number: JP9603165
(87) International publication number: WO9742032

(57) **Abstract**

A roller (1) to be controlled and a device (10) for supplying heat conducting medium thereto are connected by a valve tubular member (11) consisting of at least one tube (member 14) and a valve (15). A flow control unit (20) outputs an on-off driving signal for the valve of each valve tubular member to a valve driving unit (22) based on a control signal which is outputted from a temperature control unit (21), and carries out an on-off motion of each valve between two points with predetermined opening degrees including totally opened or totally closed condition of the valve, so that the flow of the heat conducting medium to the roller quickly responds to a change in the temperature of the outer periphery portion of the roller and the temperature of the outer periphery portion of the roller is fine-tuned at a target value. By using an on-off type of valve for the flow control of the heat conducting medium, the apparatus becomes less expensive and small in size. Since one or a plurality of valve tubular members or by-pass conduit lines can be selected according to the various requirements of the roller system, the roller temperature regulation can be carried out so as to be suitable for each kind of apparatus.

## Description

### Technical Field

The present invention relates to a roller temperature regulating system which is used for a heating roller or a cooling roller for printing such as an inking roller, and a dampening roller of a printing machine, and is also used for a roller or the like of a machine for processing plastic films, a paper-making machine, textile machinery, and the like, and the present invention particularly relates to a roller temperature regulating system which is preferable for controlling the temperature of the outer periphery portion of a roller to maintain a target temperature by controlling the flow of cooling or heating medium (heat conducting medium) for cooling or heating a roller.

### Background Art

Rollers rotating in contact with others, rollers for cooling work pieces in contact with the rollers, and the like are used in the above-described several kinds of machinery. Taking for an instance, there are arranged several inking rollers between an ink reservoir and a plate cylinder in the printing machine to feed ink to plates of the plate cylinder by transmitting ink sequentially from one roller to the other contiguous roller. These rollers are apt to go up the temperature of ink on the surface thereof due to a rolling friction heat generated by the rotation in contact with others.

According to specifications of ink, an admirable temperature and range of temperature in use of ink are prescribed, therefore rise in the temperature of a roller does not meet the specifications of ink, and becomes a main cause to spoil the quality of printed papers. For instance, the preferable temperature of ink in waterless offset press is generally recommended to be about 30°C. Accordingly, the surface temperature of the inking roller being out of the conditions for use due to the above-described rolling friction heat becomes a main cause to spoil the quality of printed papers.

In case of dampening water, the temperature is controlled at a suitable value by heating or cooling the dampening water itself.

Reflecting such prior art in this field, some of technology to cool a roller have been developed so as to control the rise in the surface temperature of the roller and to keep it a preferable value. There are various methods for cooling a roller such as a water-cool method in which a water such as ground water is circulated in the roller, a method in which cold wind is blown to the roller surface, and a heat-pipe method.

As an example of this kind of cooling device, for example, a roller cooling device for printing machine is disclosed in Japanese Patent Application Laid-open No. 63-5944. An inking roller with a heat-pipe structure is disclosed in, for example, Japanese Patent Application Laid-open No. 63-47144, Japanese Patent Application Laid-open No. 59-73952.

However, a cooling roller using heat conducting medium needs a water sending means for sending water into the rotary roller, a water circulatory device, and a refrigerator, so that the size of the device becomes greater, and further there are disadvantages of a complicated control to effect an efficient operation of the system, and a troublesome maintenance.

A method for regulating the temperature of a cooling (or heating) roller by changing the temperature of cooling (or heating) medium does not have good responsiveness to a change in the temperature of the cooling (or heating) roller, because the cooling (or heating) medium has greater thermal capacity. When changing the flow amount of cooling (or heating) medium, a proportional control type of valve allows accurate and fine regulation of the flow amount, but this type of valve is very expensive and is not industrial (economical).

Further, a cooling (or heating) roller with a heat pipe has greater heat inertia as compared to a method in which a roller is directly cooled by cooling medium due to the basic structure in which the heat transfer is utilized which occurs when working medium charged into a sealed space is vaporized and condensed. Accordingly, when the roller is cooled (or heated) by a method in which the temperature of the roller is regulated by changing the flow amount of cooling (or heating ) medium, the regulation of the roller temperature inevitably lags behind to some extent. Especially when a control method is inappropriate and the control of the flow amount is rough, there is a disadvantage that the regulation of the roller temperature lags behind to a greater extent.

In the conventional heat-pipe system, when a roller is rotated at high speed, a coolant sealed in the roller is stuck on the inner surface portion of the roller in a uniform film form. This coolant film causes a phenomenon such as increased thermal resistance, reduced thermal circulation efficiency due to the heat accumulation effect, and increased surface temperature of the roller. Specifically, when the roller is rotated at high speed, heat-pipe working medium forms a uniform liquid film on the inner periphery surface of the roller, which becomes a disadvantage of producing great loss in the thermal circulation.

An object of the present invention is to provide a roller temperature regulating system which provides good responsiveness to a change in the temperature on the outer periphery portion of the roller, and provides accurate and fine regulation of the temperature of the outer periphery portion of the roller.

Another object of the present invention is to provide a roller which is used in the roller temperature regulating system, and of which surface temperature is capable of being regulated at a preferable value by heightening thermal circulation efficiency of a heat-pipe working medium when the roller is rotated.

### Disclosure of the Invention

The present invention is a roller temperature regulating system, which includes a heat absorbing / heating section which is formed inside a roller body portion and to which a heat conducting medium transfers heat, and which regulates the temperature of the outer periphery portion of the roller at a target value by flowing the heat conducting medium into and out of the heat absorbing / heating section, and is characterized by including a heat-pipe structure in which heat-pipe working medium is charged into a space formed between the heat absorbing / heating section and the outer periphery portion of the roller, a heat conducting medium temperature regulating means for regulating and maintaining the temperature of the heat conducting medium at a predetermined temperature, a tubular member for supplying heat conducting medium, of which temperature is regulated by the heat-conducting-medium-temperature-regulating-means, to the heat absorbing / heating section, a valve provided at the tubular member, a temperature control means for producing a valve driving signal based on the temperature information which is obtained from the directly or indirectly measured temperature of the outer periphery portion of the roller, and a flow control means for carrying out an on-off control of the opening and closing motions of the valve between two points with predetermined opening degrees including totally opened or totally closed condition of the valve based on a valve driving signal which is outputted from the temperature control means.

Another aspect of the invention is a roller temperature regulating system, which includes a heat absorbing / heating section which is formed inside a roller body portion and to which a heat conducting medium transfers heat, and which regulates the temperature of the outer periphery portion of the roller at a target value by flowing the heat conducting medium into and out of the heat absorbing / heating section, and is characterized by including a heat-pipe structure in which heat-pipe working medium is charged into a space formed between the heat absorbing / heating section and the outer periphery portion of the roller, a main conduit line which is provided with a main valve, and which sends heat conducting medium to the heat absorbing / heating section, at least one by-pass conduit line which by-passes the main valve of the main conduit line, a by-pass valve which is placed at the by-pass conduit line, a temperature control means for producing a valve driving signal for the by-pass valve based on the temperature information which is obtained by directly or indirectly measuring the temperature of the outer periphery portion of the roller, and a flow control means for carrying out the opening and closing motions of the valve based on the valve driving signal which is outputted from the temperature control means.

Further, another aspect of the invention is a roller which is used for a roller temperature regulating system, and has a heat absorbing / heating section in which heat conducting medium transfers heat and the heat conducting medium is flown into and out of the heat absorbing / heating section, and is characterized by including a heat-pipe structure which is constructed by a cylindrical space formed inside the cylindrical roller body by closing the open ends of a cylindrical roller body with flanges, and a wave producing means which is placed inside the roller body and which produces a wave for disturbing the film of liquid medium sealed inside which is formed on the inner periphery surface of the roller as the roller body is rotated.

### Brief Description of the Drawings

Fig. 1 is a sectional view showing the basic structure of a roller with a heat-pipe structure;
Fig. 2 is a block diagram including the control system of a roller temperature regulating system relating to the present invention;
Fig. 3 is a block diagram including the control system of a roller temperature regulating system with an independent cooling device and heating device;
Fig. 4 is a block diagram including the controlling system of a roller temperature regulating system with an auxiliary heating means which directly heats a roller surface;
Fig. 5 is a block diagram including the control system of a roller temperature regulating system of another embodiment;
Fig. 6 is a sectional view of a roller of another embodiment;
Fig. 7 is a sectional view of a stationary roller taken along A-A line in Fig. 1;
Fig. 8 is a sectional view of a rotating roller taken along A-A line in Fig. 1 before film is formed;
Fig. 9 is a sectional view of a rotating roller taken along A-A line in Fig. 1 when film is formed;
Fig. 10 is a schematic diagram of the thermal transmission of the roller surface;
Fig. 11 is a sectional view showing the basic structure of the roller relating to the present invention;
Fig. 12 is a fragmentary sectional view showing an embodiment of a wave producing means;
Fig. 13 is an explanatory view of the action of the wave producing means;
Fig. 14 is a fragmentary sectional view of the roller with a wave producing means constructed by concave portions;
Fig. 15 is a sectional view of the roller equipped with a convex portion on the inner periphery surface thereof as a wave producing means;
Fig. 16 is a fragmentary sectional view of the roller provided with a wave producing means on a flange surface;
Fig. 17 is a fragmentary sectional view of the roller provided with a wave producing means on the inner wall of the flange;
Fig. 18 is a fragmentary sectional view of the roller with a wave producing means constructed by the continuous curved surface of the flange surface;
Fig. 19 is a fragmentary sectional view of the roller with a wave producing means constructed by a wave generating member in a rib form which is placed on the inner wall of the flange; and
Fig. 20 is a fragmentary sectional view showing a modification of a wave producing means in a rib form.

### Best Mode for Carrying out the Invention

In order to explain the present invention more specifically, the present invention is described with reference to the attached drawings.

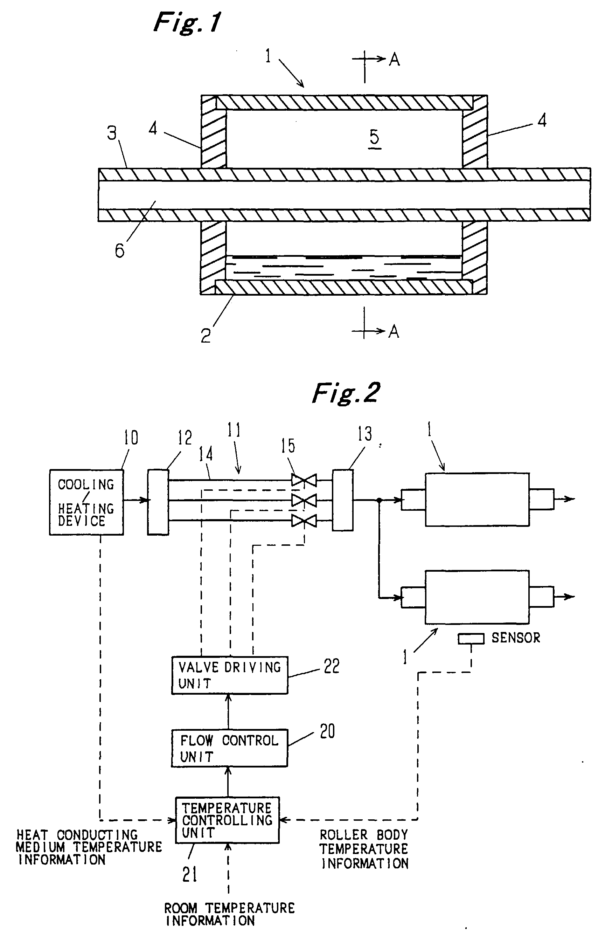

Fig. 1 shows the basic structure of a roller with a heat-pipe structure. A heat absorbing / radiating section in the present invention is a functioning section in which a heat conducting medium absorbs the heat of the outer periphery portion of the roller, or a heat conducting medium heats the outer periphery portion of the roller through a heat-pipe working medium to carry out the heat exchange.

A roller 1 consists of a roller body portion 2 and a hollow shaft portion 3 with the roller body portion 2 and the hollow shaft portion 3 being connected by a flange portion 4, and a heat-pipe working medium (hereinafter referred to as working medium) is charged into a space 5 which is formed inside to involve a heat-pipe structure. Here, the roller body portion 2 includes the outer periphery portion of the roller of which temperature is regulated, and the hollow shaft portion 3 is formed inside the roller body portion 2 to construct a heat absorbing / heating section in which heat is transmitted by a heat conducting medium.

The hollow shaft portion 3 forms a passage 6 through which a cooling or heating medium (heat conducting medium) for cooling or heating the heat-pipe working medium is flown. As for the heat conducting medium, an ordinary cooling or heating medium, for example, oil, water, antifreezing solution, humidified air, gas-liquid mixture (in an atomized form), and low-boiling medium (Freon, ammonia) can be used. It is preferable to use machine oils and lubricant oils which are used for cooling or lubricating the mechanical components of the machines in which the roller of the present invention is incorporated, or to use the same kinds of oil, so that a simple structure can be realized by using an equipment for more than one purpose while a bad effect can be prevented that results from mixing different kinds of oil.

In the structure of the roller described above, in the case of the cooling roller, when the temperature of the outer periphery portion of the cooling roller exceeds a target value, the working medium inside absorbs heat, and cools the roller. In the case of the heating roller, when the temperature of the outer periphery of the heating roller is less than a target value, the roller is given heat from the working medium and heated. In this way, by using the thermal medium as the heat conducting or cooling medium, the temperature of the outer periphery portion of the roller can be fine-tuned to be a target value. Specifically, the heat exchange is carried out between the working medium and the heat conducting medium that flows through the passage 6 in the hollow shaft portion 3, and the temperature of the outer periphery portion of the roller is then controlled with quick responsiveness.

Next, the roller temperature regulating system with a heat-pipe structure will be explained. Fig. 2 shows the basic structure of the roller temperature regulating system. Here, the roller temperature regulating system controls a plurality of rollers, but of course, the system can control only one roller. A cooling and / or heating device 10 forms a means for regulating the temperature of the heat conducting medium, having a function to regulate the temperature of the heat conducting medium that is flown through the hollow shaft portion 3 of the roller 1 to be a temperature required for regulating the temperature of the outer periphery portion of the roller, and the heat conducting medium which is regulated here is sent to the hollow shaft portion 3 of each roller through a valve tubular member 11 by a pump. The valve tubular member 11 is connected to an upper stream side conduit line connecting portion 12 which is placed at the side of the cooling and / or heating device 10, and is connected to a downstream side conduit line connecting portion 13 which is placed at the side of the roller 1. Through these conduit line connecting portions, the cooling and / or heating device 10 and the hollow shaft portion 3 of the roller are connected.

The valve tubular member 11 is constructed by combining (uniting) a tubular member 14 and a valve 5, and a plurality of combined valve tubular members are placed. In the embodiment, the cooling and / or heating device and the hollow shaft portion 3 of the roller are connected by three combined valve tubular members. When the valve 15 is constructed by a plurality of combined valve tubular members, the on-off control of the valve of each combined valve tubular member is carried out under predetermined conditions. Specifically, the flow of the heat conducting medium is regulated by controlling a group of valves by tuning on and off (opening and closing) the entire valves (a group of valves). By changing the on-off ratio of each valve, the flow of the combined valve tubular member is controlled.

As for the control of the opening degree of a valve, the valve is opened or closed by a completely open-close motion, which totally opens or closes the valve, by an open-close motion between two points with predetermined opening degrees, for example, between the points with the opening degree of 80% and the opening degree of 20%, or by the combination of the above-described completely open-close motion and the open-close motion between two points with predetermined degrees. As for the valve, an inexpensive small on-off control type of valve, for example, a solenoid valve can be used. The kind, and the number of rollers are determined according to the amount of change of the temperature of the outer periphery portion of a roller, the difference between the temperature of a heat conducting medium and the target temperature of the roller temperature regulation, and the difference between the target temperature of the roller temperature regulation and the temperature of the outer periphery portion of the roller, which are taken into consideration as parameters.

In Fig. 2, the control system of the roller temperature regulating system will be explained. Here, the temperatures of the outer periphery portion of a representative rollers of a plurality of groups of rollers are measured, and the detected temperatures are inputted into a temperature control unit 21 as roller temperature information. A flow control section unit 20 outputs an on-off control signal for a group of valves of respective valve tubular members to a valve driving unit 22 based on a temperature control signal for each roller which is outputted from the temperature control unit 21. The temperature control unit 21 outputs a valve driving signal for each valve of the combined valve tubular member based on the temperature information of the outer periphery portion of the roller which is detected by the roller surface temperature sensor, or the temperature information of the outer periphery portion of the roller and the temperature information of the heat conducting medium from a cooling and heating device, and set temperature.

Here the room temperature which is detected by a room temperature sensor is used upon a necessity. As temperature information in this case, the temperature of the outer periphery portion of a roller and room temperature, or the temperature of the outer periphery portion of a roller, room temperature, and the temperature of heat medium are used. The valve driving unit 22 carries out on-off control based on the valve driving signal from the flow control unit 20 independently for each valve of the combined valve tubular member. In Fig. 2, the control system for two rollers is shown, but the above structure can be similarly applied to the control system for one roller or for a group of rollers consisting of more than two rollers.

In the embodiment, the controllability of the temperature regulation of the outer periphery portion of a roller can be enhanced by controlling the flow of the heat conducting medium to be supplied in consideration of the temperature information of the heat conducting medium from the cooling and / or heating device.

According to the embodiment, the flow of the heat conducting medium which is supplied into a roller can be instantly changed by an on-off control of the valves, therefore quick responsiveness to a change in the temperature of the outer periphery portion of the roller is obtained, and the temperature of the roller is regulated with high accuracy.

In the embodiment, the valve tubular member is explained as a member which is indirectly connected to between the cooling and / or heating device and the roller by the medium of the conduit line connecting portions, but without using one or both of the conduit line connecting portions, the valve tubular member can be connected to between the cooling and / or heating device and the roller, with one end directly connected to the cooling and / or heating device or the roller, or with both end directly connected to the cooling and / or heating device and the roller. A closed system can be adopted, in which the heat conducting medium, which is outputted from each roller after conducting heat exchange with working medium of each roller, is returned to the cooling and / or heating device to be recycled.

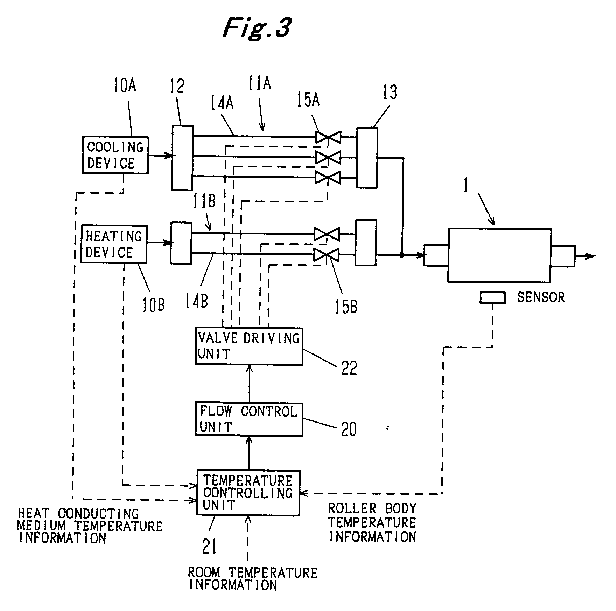

Next, another embodiment will be explained. Fig. 3 shows a system structure of another embodiment. Here, a roller temperature regulating system including one roller is shown, but the similar structure can be also applied to a roller temperature regulating system including a number of rollers. The embodiment is applied to a control system for regulating the temperature of the outer periphery portion of the roller to be a target value by cooling or heating the roller, and is characterized by including independent cooling and heating devices, each of which supplies cooling medium or heating medium by the means of its own group of valve tubular members.

In Fig. 3, a cooling device 10A and a heating device 10B respectively send their own heat conducting mediums to the roller with a valve tubular member 11A and a valve tubular member 11B. The valve tubular member 11A for cooling is constructed by combining a tubular member 14A and a valve 15A. On the other hand, the valve tubular member 11B for heating is constructed by combining a tubular member 14B and a valve 15 B into a unit. The control of the valves 15A and 15B is carried out by an on-off control similarly in the embodiment in Fig. 2. According to the above structure, switching to cooling or heating is easily accomplished, and necessary amount of flow of heat conducting medium after switching can be quickly supplied to the roller, therefore the responsiveness to a change in roller temperature is improved.

The number of valve tubular members constructing a group of valve tubular members for cooling or heating can be selected freely, for instance, one member for each group of the cooling and heating valve tubular member, one member for one group of the cooling and heating valve tubular member and a plurality of members for the other, or a plurality of members for both groups of the cooling and heating valve tubular members.

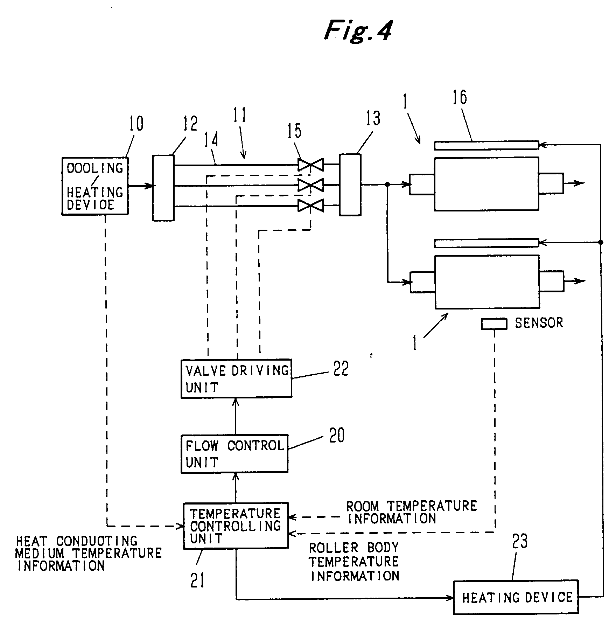

As an auxiliary heating means, a heating device such as a warm-air fan heating device for heating the outer periphery portion of a roller by blowing warm air thereto, or an infrared heating unit for heating the roller by an infrared heater are used. In an example shown in Fig. 4, an infrared heater 16 is placed face to face with the outer periphery portion of the roller, and an energizing control of the infrared heater 16 is performed in a heating device 23. Since the temperature of the roller surface starts to rise quickly by controlling the energization of the infrared heater based on the command from the temperature control unit 21, the temperature of the outer periphery portion of the roller can reach the target value quickly by using the heating device at the beginning of an operation, and the time for idling can be shortened. By supplying thermal medium from a cooling and / or heating device in addition to a use of heating device during an idling period, a roller can be heated from both inside and outside, and the temperature of the outer periphery portion of the roller can reach a target value more quickly.

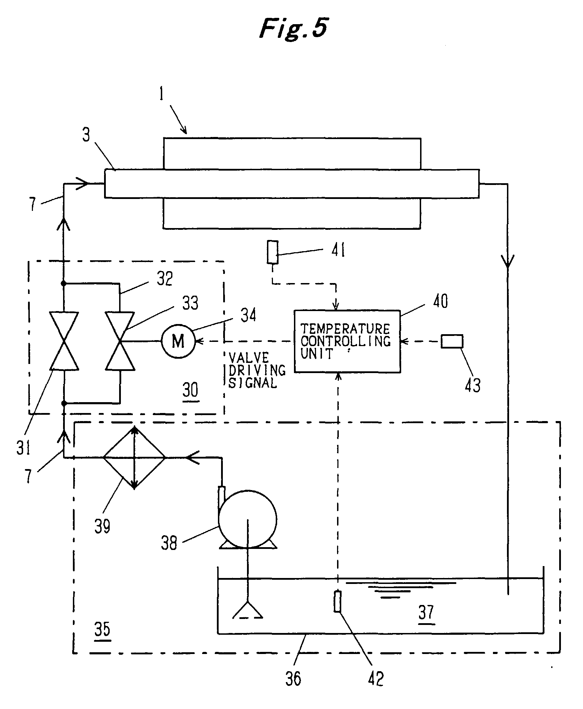

In a roller temperature regulating system which is shown in Fig. 5 as another embodiment of the present invention, a main valve for regulating the flow of heat conducting medium to be constant is placed at a main conduit line through which the heat conducting medium is flown into the roller body portion, and a by-pass conduit line is placed which branches from the main valve, with a by-pass valve of an on-off operation being placed at this by-pass conduit line. Here, in order to simplify the explanation, a structure including one by-pass conduit line and a valve is described, but a structure including a plurality of by-pass conduit lines and valves is naturally included. The number of by-pass conduit lines cap be determined in the same way as the number of valve tubular members explained in the embodiment in Fig. 1.

A flow control unit 30 controls the flow of cooling medium which is to be supplied to the roller and which is regulated at a predetermined temperature in a cooling circulatory device 35 based on a valve driving signal which is outputted from a temperature control unit 40. To this end, the flow control unit 30 consists of a main valve 31 which is attached to a main conduit line 7 which is connected to the hollow shaft portion 3 of the roller 1 and which supplies cooling medium (heat conducting medium) to the passage placed in the hollow shaft portion 3, at least one by-pass conduit line 32 which bypasses the main valve 31, a by-pass valve 33 which is attached to each by-pass conduit line 32, and a valve driving motor 34 for opening and closing the by-pass valve 33. The opening degree of the main valve 31 is set (fixed) so as to pass a constant flow according to the capacity of the cooling circulatory device 35 necessary for regulating the temperature of the roller. The by-pass valve 33 produces opening and closing motions between two points with predetermined opening degrees including totally opened or totally closed conditions, and the flow of the main conduit line 7 is controlled by changing the flow of the by-pass conduit line according to the number of times at which the opening motion takes place per unit time.

The cooling circulatory device 35 regulates the temperature of heat conducting medium which is sent to the roller at a predetermined value, and has a function of providing treatment to recycle the heat conducting medium which is returned from the roller. When, for example, oil is used as cooling medium, oil 37 is stored in a oil tank 36. The oil 37 is sent with a pump 38, and after passing through a cooler 39, the oil 37 is sent to the flow control unit 30. The cooler 39 cools the oil which is sent from the pump 38, and regulates the temperature of the oil at a constant predetermine temperature.

The temperature control unit 40 computes the amount of flow necessary for regulating the temperature of the roller based on each temperature information which is detected at a roller-surface-temperature-detecting-sensor 41 and an oil-temperature-detecting-sensor 42, and set temperature. The temperature control section 40 computes the amount of control of the by-pass valve according to the obtained amount of flow, and outputs a valve driving signal to the flow control section 30 based on the amount of control. By using the temperature information of the cooling medium which is obtained from the oil temperature detecting sensor 42 in the oil tank 36 of the cooling circulatory device when the amount of on-off control of the by-pass valve is computed, the temperature of the roller can be regulated with high accuracy. By adding the room temperature information from a room temperature detecting sensor 43 as temperature information necessary for regulating the temperature of the roller, the temperature of the roller can be regulated with higher accuracy.

In the roller temperature regulating system, by performing the on-off operation of the valve at the by-pass conduit line in response to temperature information such as roller temperature, the temperature of heat conducting medium, and the like, the flow of the heat conducting medium which is flown into the roller is controlled, and the roller temperature is regulated at a target value. By combining the by-pass conduit line and the valve, and by using a number of combinations of them, the roller temperature can be fine-tuned with higher responsive accuracy. When applied to a group of rollers consisting of a number of rollers, the temperature of each roller can be regulated by controlling the flow of the heat conducting medium which is supplied to each roller based on the temperature information of each roller.

Especially when applied to an inking roller in a printing machine, the change in temperature is not so great because the temperature of the roller only goes up to about the normal temperature + 30° C at the maximum, and a dampening roller only goes up to the maximum room temperature. Accordingly, by controlling with the main valve and the by-pass valve, namely, by the method of fixing the opening and closing of the main valve while carrying out an on-off type of fine control of the opening and closing of by-pass valve, the same effect as in the case of using a proportional control type of valve can be consequently obtained.

In the embodiment, the system is explained which regulates the roller temperature by cooling the roller, but such a system can be constructed as regulates the roller temperature by heating with a use of heating medium as heat conducting medium. Further, heat conducting medium supplying devices for cooling and heating can be independently provided, and each device can be separately controlled.

In each embodiment of the invention described above, the system is explained which is applied to the roller temperature regulating system including a roller with a heat-pipe structure in which heat-pipe working medium is charged in the clearance between the roller body portion and the hollow shaft portion, and inter thermal medium is flown into a hollow shaft portion, but the structure of a roller is not limited to that in the above. For example, it may be suitable to use such a kind of heat pipe as is provided with a fin at the outer portion of the roller shaft, and performs heat exchange between heat-pipe working medium and heat conducting medium through the fin. The cooling method by using the heat pipe equipped with the fin can be adopted to the system in which enough space can be secured for placing the fin at the end portion of the roller shaft without contacting or interfering with the machines (components) surrounding the end portion. However, if the space is as small as 2 to 3 cm long, and if there are limitations on the length of the outer diameter of the tin and so on, the surface area, namely, the heating surface area of the fin cannot be great as the result, and even if the amount of cooling (or heating ) medium is increased, it does not work effectively so that the cooling capacity is insufficient and the responsiveness to the change in the roller temperature becomes slow. Accordingly, the above disadvantage can be eliminated by using a method of supplying heat conducting medium to a hollow shaft portion.

When applied to an inking roller or a dampening roller for printing, for example, in four-color printing, the system may be constructed in such a way as to measure the temperatures of the rollers of four units and then to control the flow of heat conducting medium of each unit from the result. However, the temperature of the roller is more influenced by the printing speed and the room temperature, and is less influenced by the printing color, therefore the quality of printing is not reduced, even if the flow control of all the rollers of four colors is performed based on the roller temperature of only one color. Consequently, the control apparatus can be simplified, which makes it cost-effective.

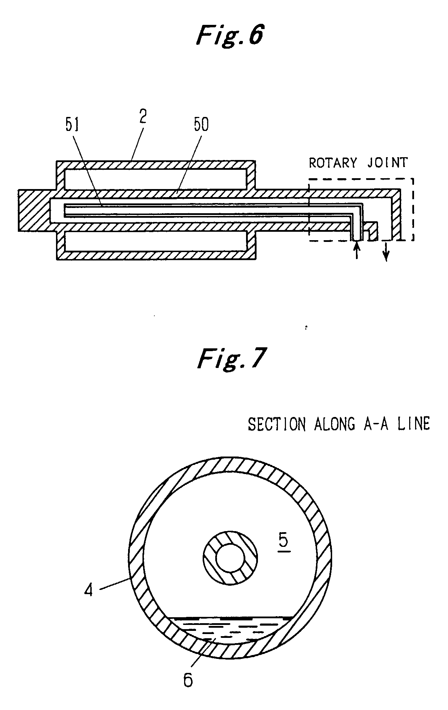

A heat absorbing / heat heating section extends from one end to the other end inside the roller body portion 2 as illustrated in Fig. 6, and has a double-pipe construction consisting of an outer pipe 50 with its foremost end being closed and an inner pipe 51 which is placed within the outer pipe 50. One end of the inner pipe 51 is open in the vicinity of the one end of the outer pipe 50, and the other end of the inner pipe 51 extends from the outer pipe 50 which is extended outside the roller body portion 2. The outer pipe 50 and the inner pipe 51 which are extended outside the roller body portion 2 are connected to the heat conducting medium conduit line through a rotary joint (a portion shown by a dotted line in the drawing) for the inflow and outflow of heat conducting medium. The heat conducting medium is flown into the inner pipe 51 through the rotary joint, then is flown into the outer pipe 50 from the open end of the inner pipe 51, passing through the portion between the inner pipe 51 and the outer pipe 50, and is flown out through the rotary joint. When the heat conducting medium passes through the portion between the inner pipe 51 and the outer pipe 50, the heat exchange is carried out between the heat conducting medium and the heat-pipe working medium of the roller body portion.

Next, an embodiment of a roller with a heat-pipe structure which is applied to the roller temperature regulating system of the present invention will be explained.

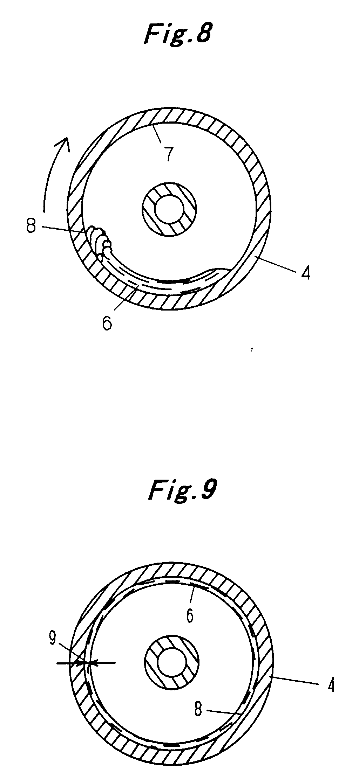

When the roller 1 is rotated from a non-rotating condition (Fig. 7), if the contact resistance which is generated between the gravity acting on the thermal circulation cooling medium (liquid-phase medium) 6, which is sealed inside, and the inner periphery surface of the roller is greater than centrifugal force, the condition is as shown in Fig. 8. Under this condition, the heat exchange is accelerated remarkably in the vicinity 8 of the point in which the thermal circulation cooling medium 6 falls off the roller inner surface 7.

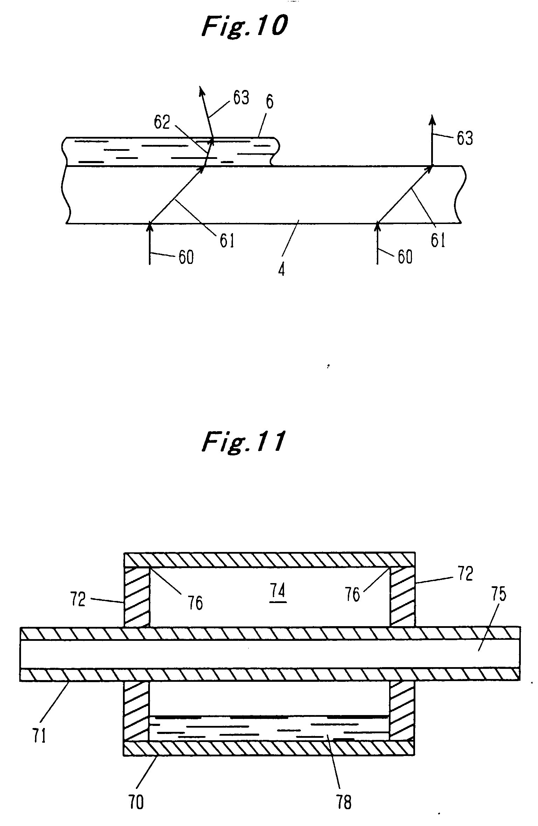

Fig. 9 shows a condition in which centrifugal force which acts on the thermal circulation cooling medium 6 sealed inside is greater than the other external forces when the roller 1 in Fig. 1 is rotated. Under this condition, the thermal circulation cooling medium 6 is shaped in a uniform film form 9 on the roller inner surface 7, and in this case, the heat resistance of the thermal circulation cooling medium 6 is added to the thermal resistance of the roller wall itself, so that the beat exchange cannot be conducted effectively. Fig. 10 shows a coolant 6 which is in a film shape which is formed on the roller wall 4 when the roller is rotated, and shows the case in which a vaporization (heat exchange) 63 takes place directly after a load 60 experiences a thermal resistance 61 of the roller wall, and the case in which a vaporization 63 takes place after a load 60 experiences a thermal resistance 61 and a thermal resistance 62 of film-shaped cooling medium is added thereto.

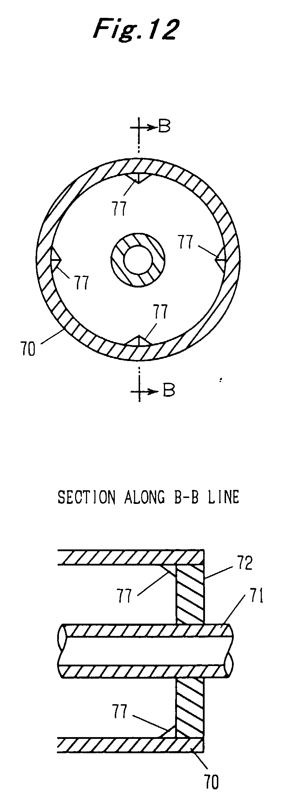

In order to improve the condition described above, the structure Is adapted to promote an action for disturbing the liquid film when centrifugal force occurs. The structure of the main roller portion of the embodiment will be explained with reference to Fig. 11. The roller consists of a roller body portion 70 and a rotary shaft 71, and both members are connected by a flange 72 with a space 74 being formed inside. The space 74 of the roller forms a heat pipe, and thermal circulation is carried out between the heat pipe and the fluid which passes through a passage 75 inside the rotary shaft. At boundary portions 76, at which the roller body 70 and the flange portion 72 are inscribed on each other , one or a plurality of protuberances 77 with a height of several millimeters are placed on the circumference as is shown in Fig. 12.

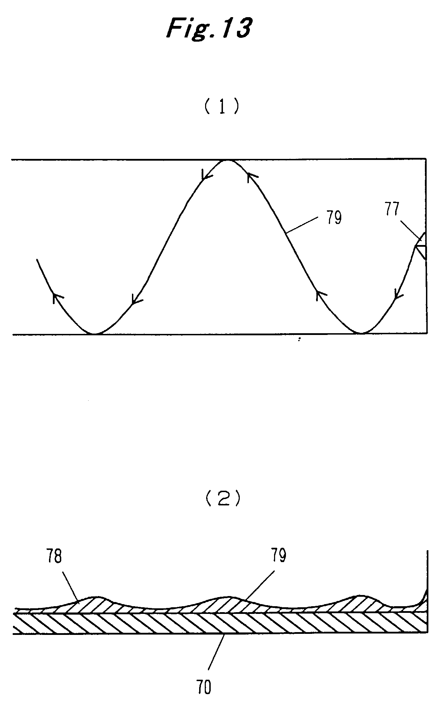

The protuberance 77 is shaped to be a triangle pole or the like which is of high resistance against working medium 78, and produces a component of force parallel (parallel to the rotational axis) to the roller inner surface by the action of centrifugal force (a force radial to the rotational axis). As a result, a line-shaped wave 97 shown in Fig. 13 (1), forming a turning flow from the protuberance 77 as a starting point, constantly generates. As Fig. 13 (2) shows, as the result that the liquid film is disturbed by the generated wave 79, a phenomenon is prevented in which the heat accumulated in the liquid inhibits the heat exchange with the heat pipe.

For example, when the target temperature is 30° C, the temperature of an inking roller without a protuberance immediately goes up to 30° C at a rotational speed of 100 RPM or more, and thereafter, the temperature becomes 40° C to 50° C, so that the temperature is not controlled at the target temperature. On the other hand, according to the present invention, as the result of the experiment in the same conditions as in the above, the temperature can be controlled at 30° C ± a few degrees centigrade at a rotational speed of 700 RPM.

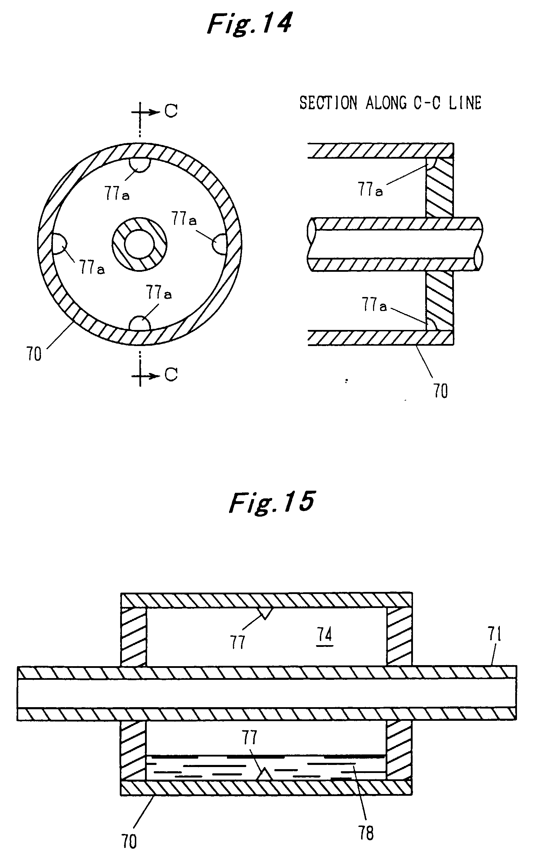

The protuberance 77 of the invention forms a wave producing means for producing a wave to disturb the liquid film which is formed on the roller inner surface. In the embodiment described above, the wave producing means is formed by the protuberance 77, which is a convex portion projected to the space which is formed inside the roller body, but it may be formed by a concave portion 77a as shown in Fig. 14. The concave portion 77a can be formed by a recess or a groove. In the embodiment, four protuberances 77 are spaced at 90° intervals, but the degrees of the interval may be different from the embodiment. Further, it is suitable that the roller has at least one protuberance 77, and the number of protuberances 77 can be properly selected in consideration of the rotation balance of a roller. The location of the protuberance 77 is not limited to the above-described boundary portion, and it may be the vicinity of the above-described boundary portion, the inner wall surface (refer to Fig. 15) of the roller body which is further away from the vicinity of the boundary portion, or the flange surface described below, if only the location provides the operation effects of the present invention.

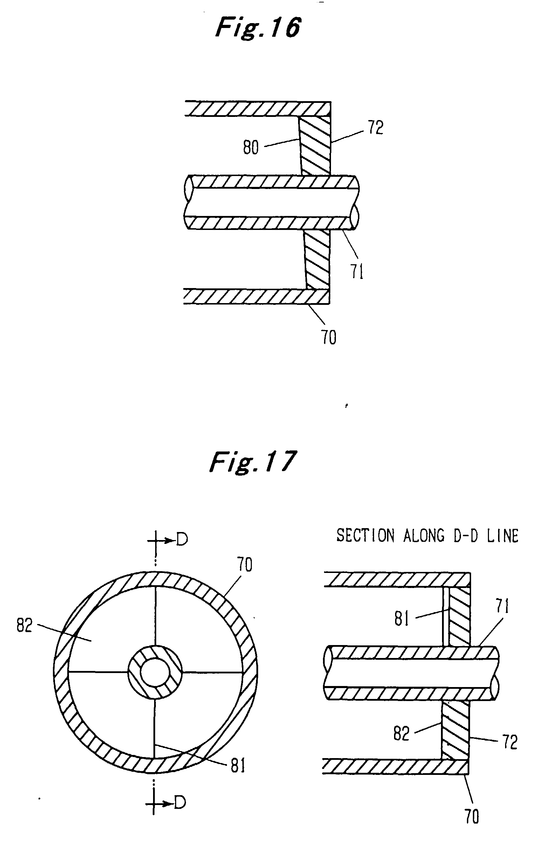

Next, another embodiment of the wave producing means will be explained. Fig. 16 shows the structure of the roller of the wave producing means of a second embodiment. The embodiment is characterized by the wave raising portion having a flange surface 80, which has a non-vertical surface to the roller axis, of the flange portion 72 connected to the roller body 70, specifically, the flange surface 80 which is slanted at a predetermined angle. Non-vertical flange surface 80 produces a component force parallel to the roller wall surface (parallel to the rotational axis) by a change in contact resistance with the working medium during the rotation of the roller, and centrifugal force by the rotating force (radial force to the rotational axis). Accordingly, a line-shaped wave caused by the change in the contact resistance is constantly produced, and as the result, a simple liquid film which is generated by simple rotation is disturbed, so that a phenomenon can be prevented in which the heat accumulated in the liquid film hinders the heat exchange.

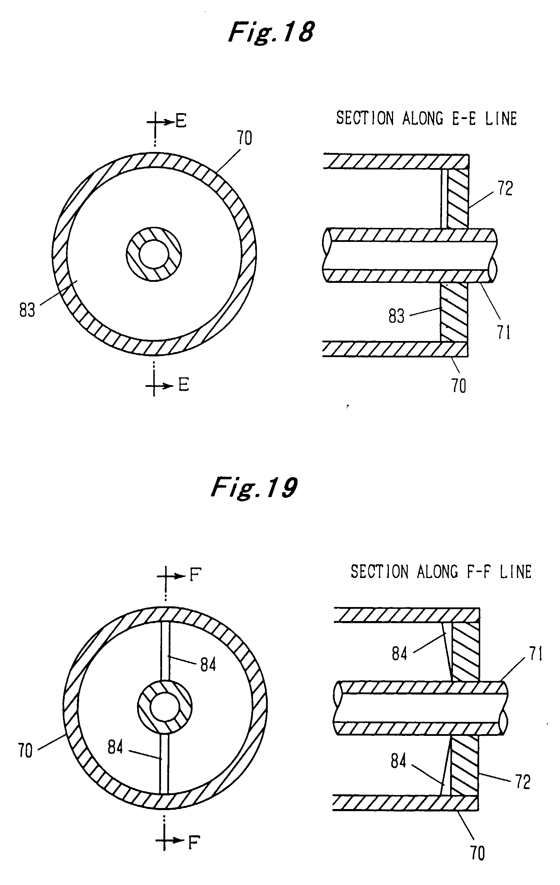

Fig. 17 shows the roller structure of a third embodiment. In the embodiment, a flange surface of the flange portion 72 which is connected to the roller body 70 is formed to be a non-flat surface. Specifically, a level difference 81 is provided, and a discontinuous surface 82 which does not match the level difference 81 is formed. As Fig. 18 shows, a continuous curved surface 83 is formed.

The discontinuous surface 82 or the continuous curved surface 83 generates a component force parallel to the inner periphery surface of the roller (parallel to the rotational axis) by the contact resistance against the working medium, displacement, and centrifugal force (radial force to the rotational axis) by rotating force. Accordingly, line-shaped waves are constantly generated by the change in contact resistance, and the same operation effect as in the first and second embodiments are obtained.

It is noted that in the second and third embodiments, smooth rotation of the roller is hindered if the change on the flange surface is too excessive, therefore the most suitable value is selected by trials for the slanting angle of the flange surface and the size of the level difference which forms a discontinuous surface.

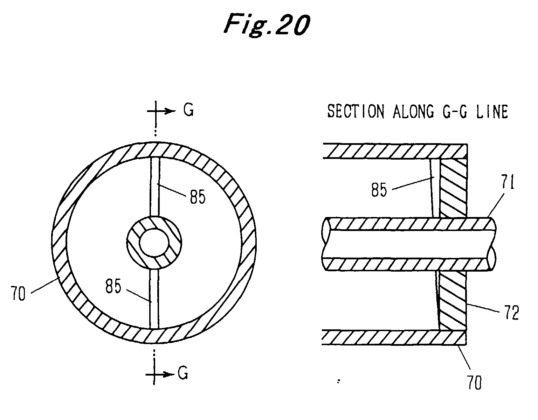

As another embodiment of the wave producing means, a structure m which a ribbed wave producing member 84 having a surface slanted in a different direction from the roller axis as shown in Fig. 19 is placed on the flange surface, or a structure in which a ribbed wave producing member 85 having a surface slanted in one direction to the roller axis as shown in Fig. 20 is placed on the flange surface may be suitable.

According to the present embodiment, excellent operational effects such as a simple structure which is easily manufactured, cost advantage, and so on can be expected.

### Industrial Availability

By performing an on-off control of the opening and closing motions of the valve of the valve tube member or the valve of the by-pass conduit line between two points with predetermined opening degrees including a totally opened or totally closed condition, the flow of the heat conducting medium can be quickly regulated in response to a change in the temperature of the outer periphery portion of the roller, and quick responsiveness of the heat exchange with the working medium of the heat pipe can be obtained. Thereby enabling the fine regulation of the temperature of the outer periphery portion of the roller at a target value. Since an on-off type of valve is used, an inexpensive and small-sized apparatus can be produced.

Since one or a plurality of by-pass conduit lines can be selected according to various conditions of the roller temperature regulating system while a plurality of valve tube members are used, the roller temperature can be regulated in such a way as to be applicable to various kinds of apparatus. As for the roller with a heat-pipe structure, for example, in the embodiment with a structure in which the heat conducting medium is flown into and out of the hollow shaft portion, the inner diameter of the shaft can be increased, and as a result, the resistance of the flow becomes small, so that highly efficient heat exchange can be obtained.

It is preferable to use mechanical oil, lubricant oil, or the same kind of oil as the above-described oil, because such oil can be also used commonly by a main machine and the structure of an apparatus is simplified.

By placing a wave producing means on the inner periphery surface of the roller with a heat-pipe structure, the liquid film of the working medium, which is formed on the inner periphery surface of the roller when the roller is rotated, is disturbed, and heat exchange with high thermal efficiency can be carried out, therefore the temperature of the roller surface can be uniformly maintained at a target value, and the quality of the finished products such as printed matter and so on is improved.

## Claims

1. A roller temperature regulating system, which includes a heat absorbing / heating section which is formed inside a roller body portion and to which a heat conducting medium transfers heat, and which regulates the temperature of the outer periphery portion of the roller at a target value by flowing said heat conducting medium into and out of the heat absorbing / heating section, comprising:
a heat-pipe structure in which heat-pipe working medium is charged into a space formed between said heat absorbing / heating section and the outer periphery portion of said roller;
a means for regulating and maintaining the temperature of said heat conducting medium at a predetermined temperature;
a tubular member for supplying heat conducting medium, of which temperature is regulated by said means, to said heat absorbing / heating section;
a valve provided at the tubular member;
a temperature control means for producing a valve driving signal based on the temperature information which is obtained from the directly or indirectly measured temperature of the outer periphery portion of said roller; and
a flow control means for carrying out an on-off control of the opening and closing motions of said valve between two points with predetermined opening degrees including totally opened or totally closed condition of said valve based on a valve driving signal which is outputted from the temperature control means.

2. The roller temperature regulating system according to Claim 1, wherein the means for regulating and maintaining the temperature of said heat conducting medium at a predetermined temperature is a cooling device which cools the heat conducting medium.

3. The roller temperature regulating system according to Claim 1, wherein the means for regulating and maintaining the temperature of said heat conducting medium at a predetermined temperature is a heating device which heats the heat conducting medium.

4. The roller temperature regulating system according to Claim 1, wherein the means for regulating and maintaining the temperature of said heat conducting medium at a predetermined temperature is a cooling / heating device which cools or heats the heat conducting medium.

5. The roller temperature regulating system according to Claim 1, wherein a valve tubular member is formed by combining said tubular member and the valve, and a plurality of combined valve tube members are used.

6. The roller temperature regulating system according to Claim 5, wherein at least one valve tubular member of a plurality of valve tubular members has only thermal medium flown therein.

7. The roller temperature regulating system according to Claim 1, wherein an cooling device and heating device are independently included, with respective valve tubular members being formed by combining tubular members and valves in which respective heat conducting mediums flow which are supplied from said devices, and the portion between the cooling device and the roller, and the portion between the heating device and the roller are respectively connected by the valve tubular members for cooling medium and the valve tubular members for heating medium.

8. A roller temperature regulating system, which includes a heat absorbing / heating section which is formed inside a roller body portion and to which a heat conducting medium transfers heat, and which regulates the temperature of the outer periphery portion of the roller at a target value by flowing said heat conducting medium into and out of the heat absorbing / heating section, comprising:
a heat-pipe structure in which heat-pipe working medium is charged into a space formed between said heat absorbing / heating section and the outer periphery portion of said roller;
a main conduit line which is provided with a main valve, and which sends heat conducting medium to said heat absorbing / heating section;
at least one by-pass conduit line which by-passes the main valve of the main conduit line;
a by-pass valve which is placed at the by-pass conduit line;
a temperature control means for producing a valve driving signal for said by-pass valve based on the temperature information which is obtained by directly or indirectly measuring the temperature of the outer periphery portion of said roller; and
a flow control means for carrying out the opening and closing motion of said valve based on the valve driving signal which is outputted from the temperature control means.

9. The roller temperature regulating system according to Claim 1 or Claim 8, wherein heat conducting medium flown into said heat absorbing / heating section is mechanical oil, lubricant oil, or the same kind of oil as said oil.

10. The roller temperature regulating system according to Claim 1 or Claim 5, wherein said temperature control means produces a valve driving signal based on the temperature information obtained by directly or indirectly measuring the temperature of the outer periphery portion of the roller, and the room temperature information.

11. The roller temperature regulating system according to Claim 1 or Claim 8, wherein said temperature control means produces a valve driving signal based on the temperature information obtained by directly or indirectly measuring the temperature of the outer periphery portion of the roller, and the temperature information of the heat conducting medium.

12. The roller temperature regulating system according to Claim 1 or Claim 8, wherein said temperature control means produces a valve driving signal based on the temperature information obtained by directly or indirectly measuring the temperature of the outer periphery portion of the roller, the room temperature, and the temperature information of the heat conducting medium.

13. The roller temperature regulating system according to Claim 1 or Claim 8, wherein said heat conducting medium is flown into one end of the roller body portion and is flown out from the other end thereof.

14. The roller temperature regulating system according to Claim 1 or Claim 8, wherein said heat conducting medium is flown into and out from one end of the roller body portion.

15. The roller temperature regulating system according to Claim 1 or Claim 8, wherein the roller is a heating or cooling roller for printing.

16. The roller temperature regulating system according to Claim 1 or Claim 8, wherein an auxiliary heating means for directly heating the roller surface is included.

17. A roller which is used for a roller temperature regulating system, and has a heat absorbing / heating section in which heat conducting medium transfers heat and said heat conducting medium is flown into and flown out of the heat absorbing / heating section, comprising:
a heat-pipe structure which is constructed by a cylindrical space formed inside the cylindrical roller body by closing the open ends of a cylindrical roller body with flanges; and
a wave producing means which is placed inside said roller body and which produces a wave for disturbing the film of liquid medium sealed inside which is formed on the inner periphery surface of the roller as said roller body is rotated.

18. The roller according to Claim 17, wherein said roller is an inking roller which is used for supplying ink in a printing machine.

19. The roller according to Claim 17, wherein said wave producing means is placed at the boundary portion between the inner periphery surface of the roller and the inner wall surface of the flange, or in the vicinity of the boundary portion.

20. The roller according to Claim 17, wherein said wave producing means is placed on the inner periphery surface of the roller except for the boundary portion between the inner periphery surface of the roller and the inner wall surface of the flange, and except for the vicinity of the boundary portion.

21. The roller according to Claim 17, wherein said wave producing means is formed by a convex portion.

22. The roller according to Claim 17, wherein said wave producing means is formed by a concave portion.

23. The roller according to Claim 17, wherein said roller is confstructed by combining either one of the following wave producing means: a wave producing means which is placed at the boundary portion of the inner periphery surface of the roller and the inner wall surface of the flange, or in the vicinity of the boundary portion, a wave producing means which is placed on the inner periphery surface of said roller except for the boundary portion of the inner periphery surface of the roller and the inner wall surface of the flange, and except for the vicinity of the boundary portion, or a wave producing means which is placed at a flange for closing an open end of the roller body.

24. The roller according to Claim 17, wherein said wave producing means is placed at a flange for closing an open end of the roller body.

25. The roller according to Claim 24, wherein said wave producing means is formed by a plane and constructed by a flange inner wall or flange surface which is not perpendicular to the roller axis.

26. The roller according to Claim 24, wherein said wave producing means is constructed by a flange surface which is not a plane.

27. The roller according to Claim 24, wherein said wave producing means is constructed by a flange surface having a wave raising portion which extends in a direction of the roller axis from the inner periphery surface of the roller.

28. The roller according to Claim 27, wherein said wave raising portion is formed by a ribbed protuberance portion, or a groove.

29. The roller according to Claim 28, wherein said ribbed protuberance portion is formed so as to have a top surface with the height from the flange inner wall surface being lower to the roller axis side and higher to the roller inner periphery surface side.

30. The roller according to Claim 28, wherein said ribbed protuberance portion is provided by combining a ribbed protuberance portion having a top surface with the height from the flange inner wall surface being lower to the roller axis side and higher to the roller inner periphery surface side, and a ribbed protuberance portion having a top surface with the height being higher to the roller axis side and lower to the roller inner periphery surface side.
